Europäisches Patentamt

European Patent Office

Office européen des brevets

(19)

(11) **EP 0 933 979 A1**

## (12) DEMANDE DE BREVET EUROPEEN

(43) Date de publication:
**04.08.1999 Bulletin 1999/31**

(51) Int Cl.⁶: **H05B 41/392**, H02M 7/538

(21) Numéro de dépôt: **99420023.6**

(22) Date de dépôt: **28.01.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **30.01.1998 FR 9801086**

(71) Demandeur: **Bureau d'Etudes Eclairage Public B.E.E.P.**
**69380 Les Cheres (FR)**

(72) Inventeurs:
- **Huot, Laurent**
  **69890 La Tour de Salvagny (FR)**
- **Escaich, Philippe**
  **69009 Lyon (FR)**

(74) Mandataire: **Myon, Gérard Jean-Pierre et al**
**Cabinet Lavoix Lyon**
**62, rue de Bonnel**
**69448 Lyon Cedex 03 (FR)**

(54) **Dispositif d'alimentation haute fréquence pour lampes d'éclairage**

(57) Dispositif d'alimentation haute fréquence pour lampe d'éclairage (10), ledit dispositif comprenant une structure de type demi-pont associé à un circuit oscillant série (6,7,8,9) dont fait partie la lampe, relié à une source de tension continue (1) par deux interrupteurs (4,5) et des moyens (13) de commande du temps d'ouverture et de fermeture desdits interrupteurs en fonction de la fréquence de la tension d'alimentation à obtenir, caractérisé en ce que les moyens (13) de commande des interrupteurs comprennent des moyens (14) de mesure d'un signal de tension traduisant la valeur du courant circulant dans la lampe (10), des moyens de comparaison de l'amplitude de cette tension avec une valeur de consigne, des moyens (20) de génération d'un signal de fréquence f de commande des interrupteurs (4,5) en vue du maintien de la tension traduisant la valeur du courant circulant dans la lampe (10) à une valeur constante et des moyens (22) de transmission du signal de commande auxdits interrupteurs (4,5).

FIG.1

EP 0 933 979 A1

## Description

La présente invention concerne un dispositif permettant d'alimenter tout type de récepteur dont l'impédance présente de fortes variations.

Ce dispositif s'applique plus particulièrement aux lampes telles que les lampes à incandescence, les tubes fluorescents, les lampes à arc dont les caractéristiques tension/courant varient de manière très importante en fonction des conditions d'utilisation (température, tension, puissance, mise en régime, etc..).

Parmi les circuits d'alimentation de ce type, on connaît des circuits du type "demi-pont" associés à un circuit oscillant RLC série, dont la résistance R est reliée par un transformateur haute fréquence. Ce système permet, de manière connue, d'alimenter un récepteur avec un courant haute fréquence. Il est d'ailleurs largement utilisé pour l'alimentation des lampes halogènes basse tension.

Cependant, pour être performant, ce système doit être commandé de manière que la fréquence d'ouverture et de fermeture des interrupteurs du circuit demi-pont soit égale à f=2$\pi \sqrt{CL}$.

Le système se comporte alors, au primaire du transformateur haute fréquence, comme une source de tension de fréquence f et d'amplitude E égale à la moitié de la valeur de la tension aux bornes de la source de tension continue qui comporte en outre des interrupteurs de liaison de circuit demi-pont à une source de tension continue, et convient pour l'alimentation des lampes à incandescence qui ont une mise en régime très rapide et présentent une caractéristique tension/courant de type résistif.

Par contre, un court-circuit permanent de la lampe entraîne une destruction des composants électroniques (courant infini).

Dans le cas de l'alimentation d'une lampe à arc, le système ne peut pas être utilisé.

En effet, la mise en régime de ce type de lampe peut prendre plusieurs minutes. Or, la lampe est équivalente à un court-circuit pendant la phase de mise en régime.

Par ailleurs, une alimentation en tension ne permet pas d'assurer la stabilité électrique de la lampe, la caractéristique tension/courant d'une lampe à arc étant négative autour de son point de fonctionnement nominal.

L'invention vise à remédier aux inconvénients précités en créant un dispositif de commande des interrupteurs statiques d'un onduleur à haute fréquence, basé sur le contrôle du courant, permettant ainsi de modifier la caractéristique de sortie du circuit demi-pont associé à un circuit RLC série de manière à la rendre compatible avec l'alimentation d'une lampe à arc.

L'invention a donc pour objet un dispositif d'alimentation haute fréquence pour lampe d'éclairage, ledit dispositif comprenant une structure de type demi-pont associée à un circuit oscillant série dont fait partie la lampe, relié à une source de tension continue par deux interrupteurs et des moyens de commande du temps d'ouverture et de fermeture desdits interrupteurs en fonction de la fréquence de la tension d'alimentation à obtenir, caractérisé en ce que les moyens de commande des interrupteurs comprennent des moyens de mesure de la tension aux bornes d'au moins un condensateur du circuit oscillant, ladite tension étant représentative de la valeur du courant circulant dans la lampe, des moyens de comparaison de l'amplitude de cette tension avec une valeur de consigne, des moyens de génération d'un signal de fréquence f de commande des interrupteurs en vue du maintien de la tension aux bornes d'au moins un condensateur à une valeur constante et des moyens de transmission du signal de commande auxdits interrupteurs.

L'invention sera mieux comprise à l'aide de la description qui va suivre, donnée uniquement à titre d'exemple et faite en se référant aux dessins annexés, sur lesquels :

- la Fig.1 est un schéma représentant le dispositif d'alimentation haute fréquence suivant l'invention; et

- la Fig.2 est un diagramme montrant la variation de la puissance en fonction de la tension au primaire du transformateur haute fréquence du dispositif de la figure 1.

Le dispositif d'alimentation en fréquence représenté au dessin, comporte principalement une source de tension continue 1 de valeur 2E qui est en fait une source de tension continue obtenue à l'aide de moyens appropriés de redressement du secteur alternatif.

Aux bornes de la source de tension 1 sont connectées en série deux condensateurs 2,3 de capacité C/2. En parallèle sur les condensateurs 2 et 3, sont connectés en série des trajets drain-source des deux transistors MOS 4,5 qui constituent des interrupteurs à haute fréquence du dispositif d'alimentation.

Entre le point de jonction des deux condensateurs 2 et 3 d'une part, et entre les deux transistors 4,5 d'autre part, sont connectés en série une inductance 6 et l'enroulement primaire 7 d'un transformateur à haute fréquence 8 sur l'enroulement secondaire 9 duquel est connectée une lampe 10 à alimenter.

En parallèle, sur les trajets drain-source des transistors 4,5 sont connectées respectivement des diodes 11,12. Les grilles des transistors 4,5 formant interrupteurs du dispositif d'alimentation, sont connectées à un dispositif de commande désigné par la référence générale 13 et qui comprend un circuit 14 de mesure de l'amplitude de la tension Vc aux bornes de l'un des condensateurs 3 du dispositif d'alimentation.

Il s'agit avantageusement d'un circuit de mesure de l'amplitude de Vc par détection de la valeur minimale Vcmin de cette tension.

La sortie du circuit de mesure 14 est connectée à une première entrée d'un comparateur 15 de l'amplitude de la tension Vc a une valeur de consigne Vcmin de cette tension, appliquée à une autre de ses entrées.

La sortie du comparateur 15 est connectée à l'entrée dans l'amplificateur 16 dont la sortie est à son tour connectée à un sommateur 18 de son signal de sortie avec une tension VCO. La sortie de ce sommateur 18 est appliquée à l'entrée d'un oscillateur contrôlé en tension ou VCO 20 qui délivre un signal de fréquence f à l'entrée d'un circuit de commande 22 qui comporte deux sorties connectées respectivement aux grilles des transistors 4 et 5 formant interrupteurs du dispositif d'alimentation.

Le circuit de commande 22 est de type classique disponible dans le commerce et ne sera donc pas décrit plus en détail.

L'agencement ainsi réalisé constitue un asservissement de l'amplitude de la tension Vc à la sortie de l'un des condensateurs 3 du circuit d'alimentation à une valeur de consigne par modification de la fréquence ou du courant, ces deux valeurs étant liées par la relation $I = C \times Vc2\pi f$ dans laquelle, I est l'amplitude du courant sur l'enroulement primaire 7 du transformateur 8 à haute fréquence et Vc est l'amplitude de la tension aux bornes du condensateur 3.

On voit donc que le circuit suivant l'invention permet de commander les interrupteurs formés par les transistors 4 et 5 pour que la tension Vc à la sortie du dispositif d'alimentation soit constante et égale à une valeur de consigne prédéterminée.

On remarquera que la modification de la valeur du courant d'alimentation de la lampe 10 est ainsi réalisée sans avoir à ajouter un composant du type transformateur d'intensité pour la mesure du courant. En d'autres termes, la mesure de la tension aux bornes d'au moins un condensateur 2 ou 3 permet de contrôler le courant circulant dans la lampe 10 sans qu'il soit pour cela nécessaire de mesurer ce courant.

Le paramètre de commande du circuit n'est donc plus la fréquence, mais la valeur de la tension Vc.

On donne ci-après quelques résultats intéressants dans le cas simple où l'asservissement est réglé de manière que l'amplitude de la tension Vc soit égale E, c'est à dire à la moitié de la tension de la source d'alimentation 1.

La puissance maximale du système est obtenue lorsque la tension V sur le primaire du transformateur 8 est égale à

$$2\sqrt{2E}/3 = 0,94E \cong E$$

On retrouve donc bien les caractéristiques du circuit demi-pont.

Cela permet de calculer le transformateur haute fréquence 8 en fonction des caractéristiques du récepteur et de la puissance souhaitée.

Ce transformateur permet de faire fonctionner le circuit dans les conditions optimales quelles que soient la valeur de l'impédance du récepteur et de la tension E. Il réalise en fait l'adaptation d'impédance entre le circuit d'alimentation et la charge 10.

Im étant le courant circulant dans l'enroulement primaire 7 du transformateur à haute fréquence 8 lorsque la puissance maximale est obtenue, et Icc étant ce même courant dans le cas où le récepteur 10 est en court-circuit, le courant Icc est donné par la relation suivante :

$$Icc = (\sqrt{2}\ \sqrt{3}/2)Im = 1,22Im$$

On voit donc qu'à condition de dimensionner les composants électroniques de manière qu'ils supportent 1,22 fois le courant nominal, le système peut fonctionner en court-circuit sans problèmes.

Il n'y a donc plus aucun risque de court-circuit pendant la mise en régime de la lampe 10.

Par ailleurs, il n'y a pas lieu d'adjoindre de dispositif de sécurité supplémentaire pour protéger le système en cas de court-circuit accidentel.

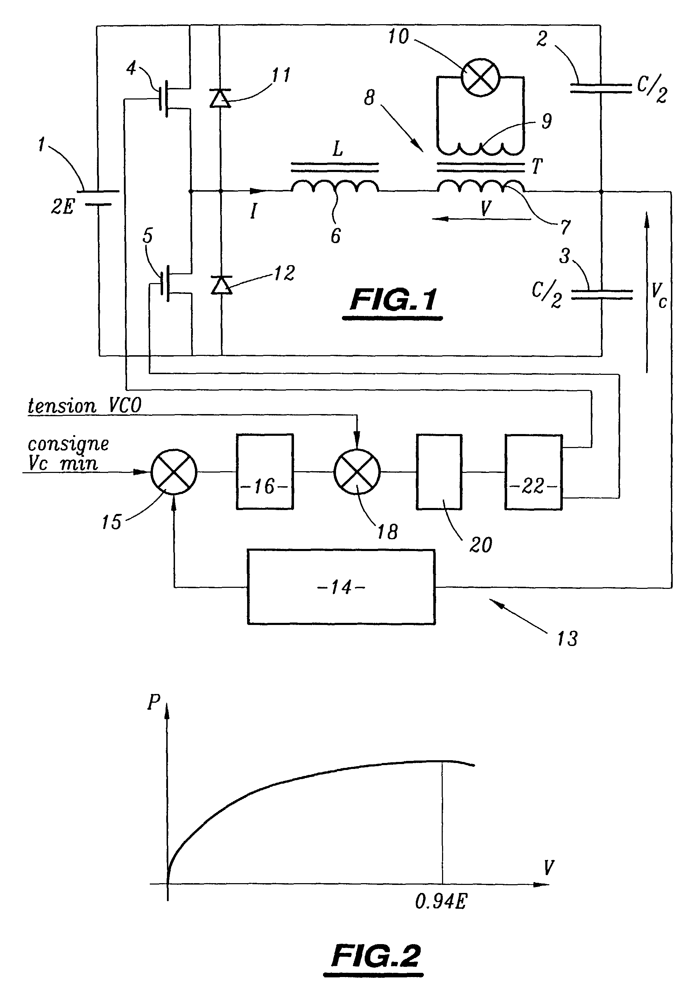

La courbe de la figure 2 représente la variation de la puissance en fonction de la tension sur l'enroulement primaire 7 du transformateur 8. Il s'agit d'une courbe de type ballast. On peut donc, avec le dispositif de l'invention, alimenter directement une lampe à arc, par exemple une lampe à vapeur de sodium à haute pression.

On peut noter que de manière générale, une modification de la tension de consigne de l'asservissement a pour conséquence une variation de la puissance transmise à la charge. Il est donc possible de manière très simple, d'agir sur cette consigne pour réaliser la variation de puissance et par conséquent, la variation d'éclairement de la lampe.

Par ailleurs, une modulation de cette consigne, à 50Hz par exemple, permet de superposer une composante basse fréquence à la composante haute fréquence du courant et atténue ainsi de manière significative les phénomènes de résonance acoustique dans le cas de l'alimentation de lampes à vapeur de sodium à haute pression.

Dans le mode de réalisation qui vient d'être décrit, le circuit demi-pont est formé avec deux condensateurs 2,3 d'égales valeurs C/2 connectés respectivement entre l'enroulement primaire 7 du transformateur à haute fréquence et chacune des bornes positive et négative de la source de tension continue 1.

On peut cependant remplacer ces deux condensateurs par un seul de valeur C qui serait connecté entre le transformateur 8 et la borne négative de la source d'alimentation.

**Revendications**

1. Dispositif d'alimentation haute fréquence pour lampe d'éclairage (10), ledit dispositif comprenant une structure de type demi-pont associée à un circuit oscillant série (2,3,6,7,8,9) dont fait partie la lampe, relié à une source de tension continue (1) par deux interrupteurs (4,5) et des moyens (13) de commande du temps d'ouverture et de fermeture desdits interrupteurs en fonction de la fréquence de la tension d'alimentation à obtenir, caractérisé en ce que les moyens (13) de commande des interrupteurs comprennent des moyens (14) de mesure de la tension aux bornes d'au moins un condensateur (2, 3) dudit circuit oscillant, ladite tension étant représentative de la valeur du courant circulant dans la lampe, des moyens de comparaison de l'amplitude de cette tension avec une valeur de consigne, des moyens (20) de génération d'un signal de fréquence f de commande des interrupteurs (4,5) en vue du maintien de la tension aux bornes d'au moins un condensateur (2, 3) dudit circuit oscillant à une valeur constante et des moyens (22) de transmission du signal de commande auxdits interrupteurs (4,5).

2. Dispositif d'alimentation suivant la revendication 1, caractérisé en ce que la lampe (10) est reliée audit circuit série par l'intermédiaire d'un transformateur à haute fréquence (8).

3. Dispositif d'alimentation suivant la revendication 2, caractérisé en ce que lesdits moyens (14) de mesure de l'amplitude de ladite tension comprennent des moyens de détection de la valeur minimum Vcmin de ladite tension.

4. Dispositif d'alimentation suivant l'une des revendications 1 à 3, caractérisé en ce que les moyens (20) de génération du signal de fréquence f de commande des interrupteurs (4,5) comprennent un oscillateur commandé en tension VCO (20), permettant d'ajuster en permanence la fréquence de commande des interrupteurs (4,5) pour maintenir constante la tension traduisant la valeur du courant circulant dans la lampe (10).

5. Dispositif suivant l'une des revendications 1 à 4, caractérisé en ce que la consigne, consigne Vcmin est variable pour faire varier l'éclairement de la lampe (10).

6. Dispositif suivant l'une des revendications 1 à 5, caractérisé en ce que la consigne, consigne Vcmin est modulée par une basse fréquence de manière à limiter les phénomènes de résonance acoustique dans les lampes telles que les lampes à sodium à haute pression.

7. Dispositif suivant l'une des revendications 2 à 6, caractérisé en ce que le circuit oscillant série comprend au moins un condensateur (2,3) connecté entre le transformateur à haute fréquence (8) et la borne négative de la source de tension continue (1).

8. Dispositif suivant la revendication 7, caractérisé en ce que le circuit oscillant comporte deux condensateurs (2,3) de même valeur connectés respectivement entre le transformateur à haute fréquence (8) et les bornes positive et négative de la source de tension continue (1).

*FIG.1*

*FIG.2*

Office européen
des brevets

**RAPPORT DE RECHERCHE EUROPEENNE**

Numéro de la demande

EP 99 42 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 4 523 128 A (STAMM THOMAS A ET AL) 11 juin 1985 | 1 | H05B41/392 H02M7/538 |
| A | * colonne 3, ligne 4 - colonne 5, ligne 38; figures 1-3 * | 2,7,8 | |
| | --- | | |
| X | US 5 563 477 A (RIBARICH THOMAS ET AL) 8 octobre 1996 | 1,4 | |
| A | * colonne 1, ligne 16 - colonne 6, ligne 3; figures 1-3 * | 6 | |
| | --- | | |
| A | US 5 365 151 A (SPIEGEL NORBERT ET AL) 15 novembre 1994 * colonne 1, ligne 8 - colonne 3, ligne 16; figures 1-10 * | 1,4,6 | |
| | --- | | |
| A | GB 2 306 062 A (INT RECTIFIER CORP) 23 avril 1997 | | |
| | --- | | |
| A | US 5 583 402 A (MOISIN MIHAIL S ET AL) 10 décembre 1996 | | |
| | ----- | | |

**DOMAINES TECHNIQUES RECHERCHES (Int.Cl.6)**

H05B
H02M

Le présent rapport a été établi pour toutes les revendications

| Lieu de la recherche | Date d'achèvement de la recherche | Examinateur |
|---|---|---|
| LA HAYE | 4 mai 1999 | Albertsson, E |

**ANNEXE AU RAPPORT DE RECHERCHE EUROPEENNE
RELATIF A LA DEMANDE DE BREVET EUROPEEN NO.**

EP 99 42 0023

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-05-1999

| Document brevet cité au rapport de recherche | | Date de publication | Membre(s) de la famille de brevet(s) | | Date de publication |
|---|---|---|---|---|---|
| US 4523128 | A | 11-06-1985 | CA | 1253199 A | 25-04-1989 |
| US 5563477 | A | 08-10-1996 | EP | 0677982 A | 18-10-1995 |
| US 5365151 | A | 15-11-1994 | DE | 4123187 A | 14-01-1993 |
| | | | AT | 151219 T | 15-04-1997 |
| | | | AU | 654041 B | 20-10-1994 |
| | | | AU | 2320092 A | 11-02-1993 |
| | | | DE | 59208294 D | 07-05-1997 |
| | | | WO | 9301695 A | 21-01-1993 |
| | | | EP | 0548342 A | 30-06-1993 |
| | | | JP | 6502044 T | 03-03-1994 |
| GB 2306062 | A | 23-04-1997 | DE | 19639873 A | 12-06-1997 |
| | | | FR | 2741757 A | 30-05-1997 |
| | | | IT | MI961997 A | 30-03-1998 |
| | | | JP | 9172786 A | 30-06-1997 |
| | | | SG | 48474 A | 17-04-1998 |
| US 5583402 | A | 10-12-1996 | AUCUN | | |

Pour tout renseignement concernant cette annexe : voir Journal Officiel de l'Office européen des brevets, No.12/82